(19) Europäisches Patentamt / European Patent Office / Office européen des brevets

(11) **EP 1 757 421 A1**

(12) **DEMANDE DE BREVET EUROPEEN**

(43) Date de publication:
**28.02.2007  Bulletin 2007/09**

(51) Int Cl.:
*B29B 11/12* (2006.01)      *B29C 31/04* (2006.01)
*B29C 47/06* (2006.01)      *B29C 43/20* (2006.01)
*B29C 49/04* (2006.01)

(21) Numéro de dépôt: **05107677.6**

(22) Date de dépôt: **22.08.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Aisapack Holding SA**
**1896 Vouvry (CH)**

(72) Inventeur: **Thomasset, Jacques,**
**c/o Aisapack S. A.**
**1896 Vouvry (CH)**

(74) Mandataire: **Besse, François et al**
**ANDRE ROLAND S.A.**
**Avenue Tissot 15**
**P.O. Box 1255**
**1001 Lausanne (CH)**

(54) **Préforme multicouche et méthode de réalisation**

(57)      Procédé de réalisation d'un objet multicouche formant un corps de révolution, ledit objet comprenant au moins un fond de diamètre D relié à une paroi latérale d'épaisseur moyenne E et de hauteur H; procédé consistant à alimenter une dose (1) multicouche co-extrudée dans la cavité d'un moule puis à comprimer ladite dose afin de former l'objet; la dose formant un corps de révolution autour d'un axe de symétrie; la dose consistant en un empilement radial de plusieurs couches (2,3,4) dont au moins une fine couche fonctionnelle (3), le diamètre extérieur de ladite dose étant sensiblement égal à D; la direction de compression étant parallèle à l'axe de symétrie de ladite dose; la compression étant réalisée sur une face de la dose, procédé caractérisé par le fait que la dose est comprimée seulement sur une partie de ladite face.

L'object multicouche obtenu selon le procédé est aussi revendiqué.

Figure 5

EP 1 757 421 A1

## Description

Domaine de l'invention

La présente invention concerne une méthode de réalisation d'objets multicouche par compression moulage d'une dose co-extrudée de résine synthétique.

Etat de la technique

Le brevet Japonais JP 2098415 propose de réaliser un objet multicouche par compression moulage d'une dose multicouche cylindrique consistant en un empilement radial de plusieurs couches de résine synthétique. Le moulage par compression de cette dose selon une direction parallèle à son axe de symétrie et créant un écoulement radial de la dose conduit à un objet présentant une structure multicouche. Selon la méthode décrite dans le brevet JP 2098415, l'écrasement de la dose et conduit à des objets multicouches tels qu'illustrés figure 3.

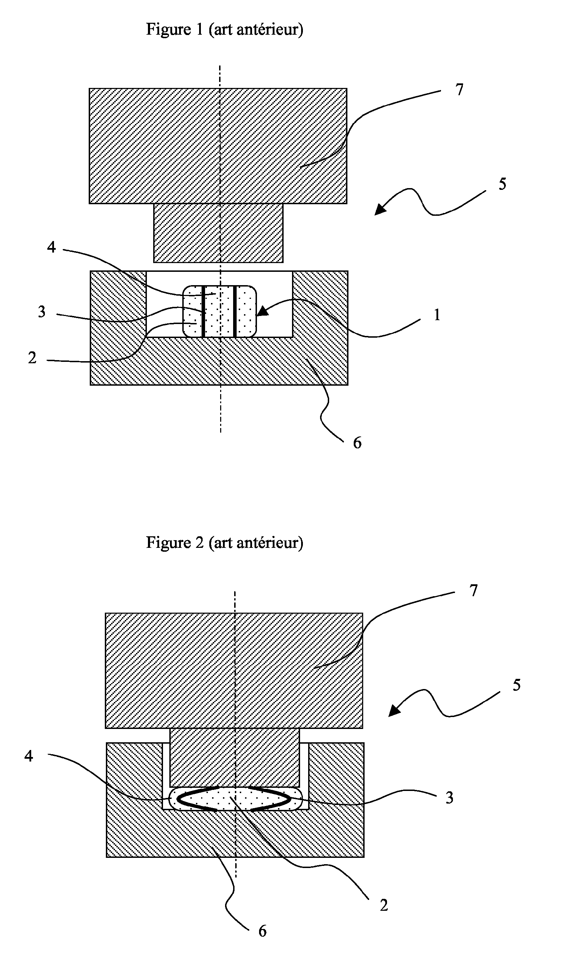

Il est proposé dans le brevet JP 2098415 d'utiliser une dose tri-couche illustrée figure 1, cette dose étant constituée d'une première résine 4 formant la partie centrale de la dose, d'une deuxième résine 3 couvrant seulement les faces latérales de la première résine, et d'une troisième résine 2 couvrant seulement les faces latérales de la deuxième résine. Cette dose est positionnée dans un moule de compression 5 comprenant une matrice 6 et un poinçon 7. L'écrasement de cette dose composite dans le moule 5 selon son axe de symétrie est illustré figure 2. L'écrasement crée un écoulement radial de la dose.

L'objet multicouche obtenu selon la méthode décrite dans le brevet JP 2098415 est illustré figure 3. La structure multicouche obtenue est caractérisée par la double couche fonctionnelle 3 emprisonnée dans l'épaisseur de l'objet ; ladite couche 3 formant un pli et présentant deux extrémités libres. Les emballages multicouches réalisés selon l'invention décrite dans le brevet JP 2098415 présentent de nombreux avantages en particulier lorsque la couche fonctionnelle est une couche barrière à l'oxygène qui permet d'améliorer la conservation des aliment contenu dans l'emballage. Cependant, en appliquant la méthode décrite dans le brevet JP 2098415, on obtient une double couche fonctionnelle 3 sensiblement centrée dans l'épaisseur de l'objet. Or, il conviendrait qu'une couche fonctionnelle soit proche de la paroi interne. Une telle configuration aurait le mérite de réduire la quantité de molécules qui migrent depuis le produit emballé dans la paroi de l'emballage, ou depuis la paroi de l'emballage dans le produit emballé. La méthode décrite dans le brevet JP 2098415 ne permet pas de modifier la position de la couche fonctionnelle dans l'épaisseur de la pièce. Il existe donc un besoin de pouvoir remédier aux problèmes précités.

Objet de l'invention

Comme on le verra par la suite, la présente invention vise à modifier la position de la couche fonctionnelle dans l'épaisseur de la pièce, de la disposer à une distance plus proche de la paroi interne que de la paroi externe de l'objet

Résumé de l'invention

L'invention consiste en un procédé de réalisation d'un objet multicouche formant un corps de révolution, ledit objet comprenant au moins un fond de diamètre D relié à une paroi latérale d'épaisseur E et de hauteur H. Le procédé consiste à alimenter une dose multicouche co-extrudée dans la cavité d'un moule puis à comprimer ladite dose afin de former l'objet ; la direction de compression étant parallèle à l'axe de symétrie de ladite dose et la compression s'applique sur une face de la dose. La dose forme un corps de révolution autour d'un axe de symétrie et consiste en un empilement radial de plusieurs couches dont au moins une fine couche fonctionnelle. Le diamètre extérieur de ladite dose étant sensiblement égal à D. Le procédé se caractérise par le fait que la dose est comprimée seulement sur une partie de ladite face.

L'invention consiste également à réaliser des objets multicouches par compression moulage d'une dose de diamètre D consistant en un empilement radial de plusieurs couches dont au moins une fine couche fonctionnelle et à positionner, grâce à l'invention, la couche fonctionnelle proche de la paroi interne de l'emballage. La dose multicouche est alimentés dans un moule et comprimée dans la direction de l'axe de symétrie de la dose. Le centrage de la dose dans le moule est important pour obtenir une répartition correcte des couches sur toute la périphérie de l'objet. Avantageusement, la dose n'est pas comprimée sur toute sa surface mais seulement sur une partie centrale de la dose, le diamètre de ladite partie centrale étant inférieur à D.

Selon un mode préférentiel de l'invention, une dose multicouche de diamètre égal à D est alimentée dans la cavité d'un moule ; le diamètre de la dose étant proche du diamètre de la cavité du moule ; le diamètre de la dose étant de préférence légèrement inférieur au diamètre de ladite cavité du moule. La dose multicouche est comprimée sur une surface sensiblement égale à (D - 2E), E étant égal à l'épaisseur de la pièce moulée. Selon ce mode préférentiel de l'invention, la dose s'écoule principalement selon la direction de compression et non pas radialement. Selon ce mode préférentiel de réalisation, la couche fonctionnelle est positionnée radialement dans la dose à une distance de préférence comprise entre

$$\frac{D-2E}{6} \text{ et } \frac{D-2E}{2}.$$ Il a été observé que les emballages multicouches réalisés selon la méthode décrite précédemment présentaient une couche fonctionnelle très proche de la paroi interne de l'emballage. Ces emballages sont particulièrement avantageux quand la couche fonctionnelle est une couche barrière. La distance inférieure $\dfrac{D-2E}{6}$ mentionnée plus haut constitue une limite permettant de maintenir convenablement la couche fonctionnelle dans la paroi de l'emballage.

L'invention est particulièrement avantageuse pour réaliser des objets dont la hauteur H est supérieure à D. Pour de tels objets où la hauteur H est suffisamment grande devant ledit diamètre D, il est obtenu des propriétés particulièrement intéressantes liées au fait que la couche fonctionnelle se trouve proche de la paroi interne dudit objet et que seule une faible partie de la paroi dudit objet ne présente pas de structure multicouche.

L'invention sera mieux comprise ci-après au moyen d'une description détaillée des exemples illustrés par les figures suivantes.

Brève description des figures

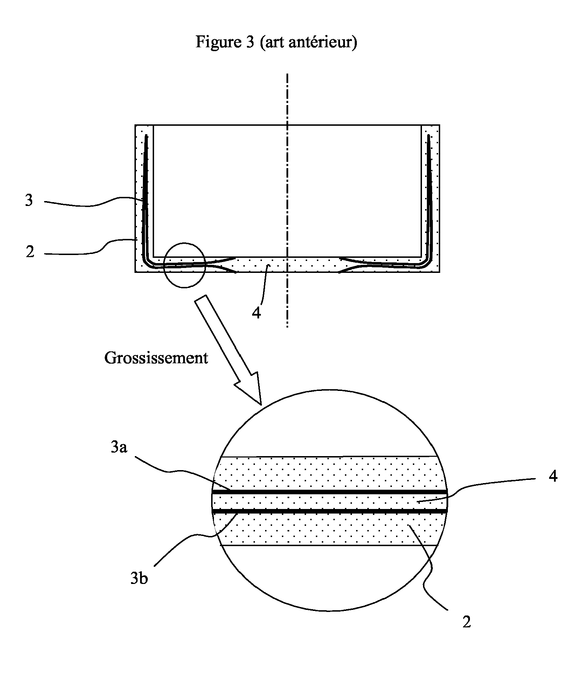

Les figures 1 à 3 illustrent un procédé de réalisation d'objets multicouches selon l'art antérieur le plus proche.

La figure 1 illustre la première étape du procédé de réalisation d'objets multicouches selon le brevet JP2098415, étape consistant à alimenter une dose multicouche dans la cavité d'un moule.

La figure 2 montre la deuxième étape du procédé de réalisation d'objets multicouches selon le brevet JP2098415, étape consistant à comprimer la dose dans le moule afin de créer un écoulement radial de la dose.

La figure 3 illustre l'objet multicouche obtenu selon le procédé décrit dans le brevet JP2098415. Cet objet comprend une fine couche de résine fonctionnelle 3 emprisonnée entre deux couches de résines 2 et 4 formant l'objet.

Les figures 4 à 6 illustrent le procédé de réalisation d'objets multicouches selon l'invention.

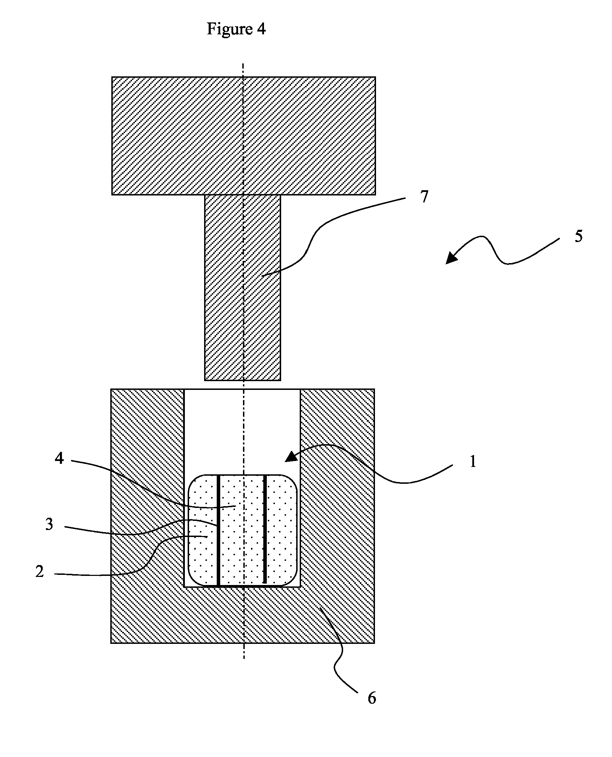

La figure 4 montre l'alimentation de la dose multicouche dans la cavité du moule, le diamètre D de la dose étant sensiblement égal au diamètre de la cavité du moule.

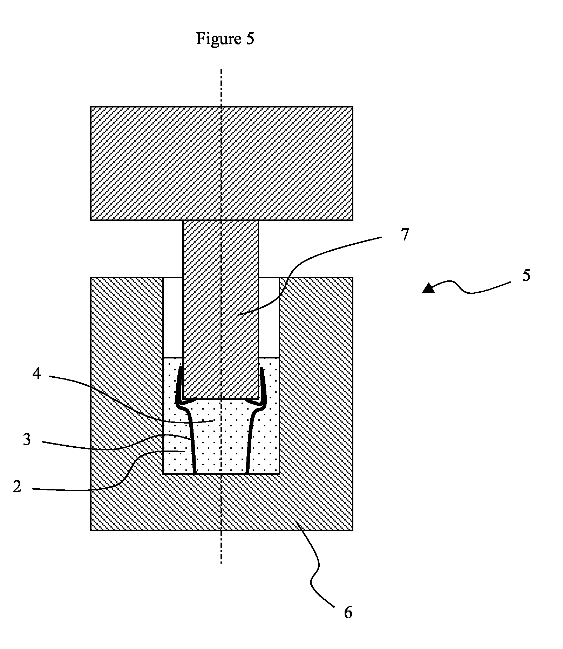

La figure 5 montre la compression de la dose selon le procédé, la compression de la dose se faisant uniquement sur sa partie centrale, la compression de la dose créant un écoulement dans la direction de compression.

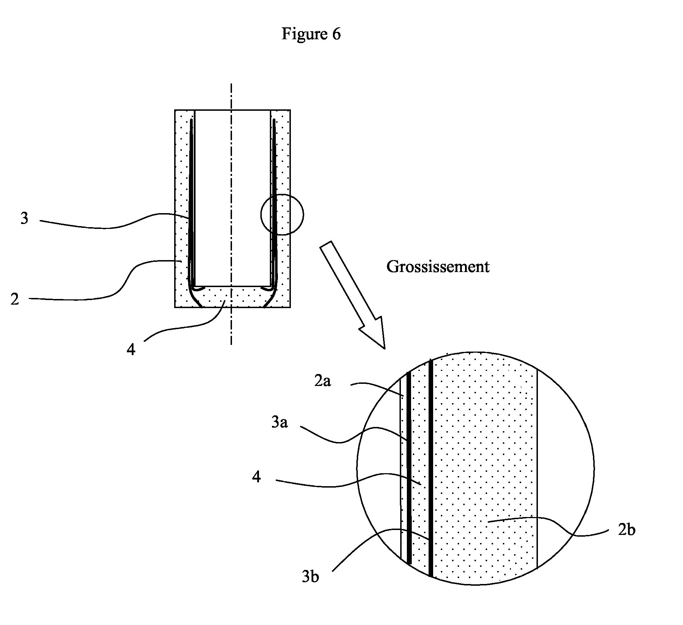

La figure 6 illustre l'objet multicouche obtenu selon le procédé inventif. Cet objet comprend une fine couche de résine fonctionnelle 3 emprisonnée entre deux couches de résines 2 et 4 formant l'objet, la couche de résine fonctionnelle 3 se trouvant à proximité de la paroi interne de l'objet.

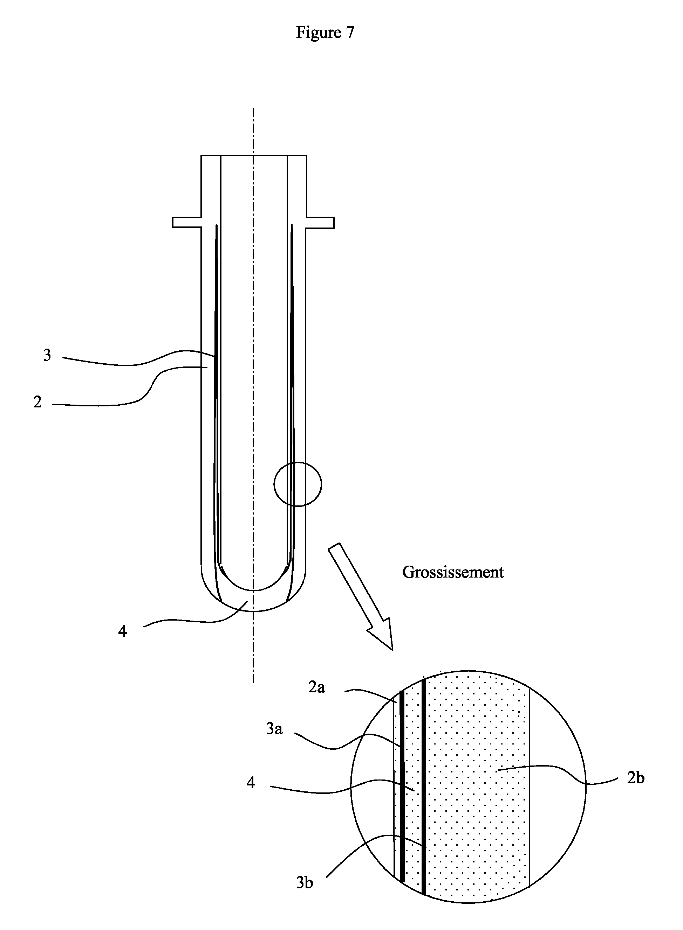

La figure 7 illustre une préforme multicouche pour la réalisation de corps creux par soufflage bi-étirage, ladite préforme réalisée selon l'invention ayant une couche de résine fonctionnelle 3 proche de sa paroi interne.

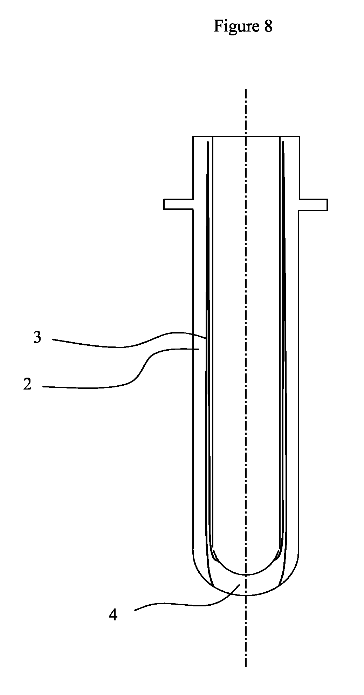

La figure 8 montre une préforme multicouche pour la réalisation de corps creux par soufflage bi-étirage, ladite préforme se distinguant de la préforme présentée figure 7 par le fait que la couche fonctionnelle 3 est présente également dans le goulot.

Description détaillée des figures

L'invention concerne un procédé de réalisation d'objets multicouches par compression moulage d'une dose multicouche.

La dose multicouche est formée par la superposition radiale de plusieurs résines et présente une géométrie cylindrique de diamètre D. L'invention est destinée, mais pas de façon exclusive, à la réalisation d'emballages multicouches possédant des propriétés barrières aux gaz ou aux arômes améliorées. Pour cette raison, la dose multicouche comprend préférentiellement une fine couche fonctionnelle sélectionnée pour ses propriétés barrières. Cette couche fonctionnelle s'écoule pendant le procédé de réalisation de l'objet et se répartit dans la paroi de l'objet. La fine couche de résine fonctionnelle est donc emprisonnée dans la dose entre des couches de résines destinées à former la paroi de l'objet. La couche fonctionnelle est souvent associée à deux fines couches de résines adhésives situées de part et d'autre de la couche fonctionnelle pour améliorer l'adhésion entre les couches. Dans la suite de l'exposé de l'invention les couches adhésives ne seront pas mentionnées afin de ne pas alourdir la présentation de l'invention. Dans le même esprit, l'exposé de l'invention est réalisé avec une dose comprenant seulement deux résines, mais des doses comprenant un plus grand nombre de résines et de couches peut être aisément réalisé, ce qui constitue un avantage important par rapport aux produits existants.

La dose multicouche servant à l'exposé de l'invention est illustrée figure 4. Cette dose 1 de géométrie cylindrique comprend une première résine formant les couches 2 et 4 et constituant au moins 80% du volume de la dose et une fine couche fonctionnelle 3 située à une distance R de l'axe de symétrie de la dose. Nous avons trouvé par expérimentation que la couche fonctionnelle est mieux répartie dans l'objet quand R est compris entre $\dfrac{D-2E}{6}$ et $\dfrac{D-2E}{2}$ ; E étant l'épaisseur moyenne de l'objet réalisé. Cet aspect de l'invention sera repris de façon plus détaillée dans la suite de l'exposé.

La dose multicouche 1 est fabriquée par co-extrusion d'un jonc. De préférence ledit jonc est extrudé à débit constant et coupé régulièrement afin de former une succession de doses multicouches. Les procédés et dispositifs permettant de fabriquer des doses étant décrits dans l'art antérieur, seul le principe de fabrication de la dose est exposé. La dose multicouche 1 peut être obtenue également par coextrusion discontinue afin de former chaque dose séparément.

La dose multicouche est alimentée dans la cavité d'un moule 5, ledit moule 5 comprenant au moins deux parties, une première partie 6, appelée matrice, qui reçoit la dose ; et une deuxième partie 7, appelée poinçon, qui dans son mouvement comprime la dose. La dose est déposée dans le moule de sorte que l'axe de symétrie de la dose soit aligné avec l'axe de symétrie de la cavité du moule. Une première partie de l'invention consiste à réaliser une dose de diamètre D proche du diamètre de la cavité du moule tel qu'illustré figure 4. Le dispositif de moulage représenté sur la figure 4 et les suivantes est une représentation schématique servant uniquement à expliquer l'invention. Les dispositifs de moulage nécessaires à la réalisation d'objets selon l'invention sont connus et ne feront donc pas l'objet d'une description précise dans le cadre de cet exposé. La cavité formée par la matrice 6 n'est pas forcément cylindrique comme il est représenté sur la figure 4, mais la paroi de ladite cavité peut former un angle avec l'axe de symétrie, qui peut être un angle de dépouille de l'ordre de 3° permettant de démouler l'objet, ou un angle plus important si l'objet est conique. Dans le cadre de l'invention la conicité des objets réalisés est généralement inférieure à 10°, l'angle de conicité étant défini par rapport à l'axe de symétrie.

La dose 1 est ensuite comprimée dans le moule selon une direction parallèle à l'axe de symétrie. Contrairement, à ce qui est décrit dans l'art antérieur et en particulier dans le brevet JP2098415, la dose est comprimée seulement sur sa partie centrale ; le diamètre de ladite partie centrale étant sensiblement égal à (D - 2E). La figure 5 montre la descente du poinçon 7 qui comprime la partie centrale de la couche supérieure de la dose 1. Le mouvement du poinçon 7 crée une déformation de la dose et un écoulement de la partie non comprimée de la dose. La couche fonctionnelle forme un pli et s'écoule le long de la paroi du poinçon 5 tout en restant totalement emprisonnée entre les couches 4 et 2. L'écoulement de la couche fonctionnelle 3 le long de la paroi du poinçon qui a été observée lors des essais était totalement inattendu. Cet écoulement apparaît dans des conditions précises décrites dans le cadre de cette invention.

L'invention concerne également les objets multicouches obtenus grâce au procédé inventif.

La figure 6 montre l'objet multicouche qui est obtenu. Cet objet comporte une couche fonctionnelle 3 formant une double couche emprisonnée entre les couches 4 et 2 formant la paroi de l'objet. La couche fonctionnelle forme un pli au niveau de l'extrémité supérieur de l'objet et présente deux extrémités libres situées au niveau du fond dudit objet. L'objet multicouche obtenu présente une double couche fonctionnelle proche de la paroi interne dudit objet. La figure 6 montre la couche fonctionnelle 3 formant une double couche 3a et 3b ; la couche 3a étant séparée de la paroi interne de l'emballage par la couche 2a ; la couche 4 séparant les couches 3a et 3b ; et la couche 2b séparant la couche 3 de la paroi externe de l'emballage. La première couche fonctionnelle 3a se trouve à une distance de la paroi interne de l'objet inférieure à E/6 et la deuxième couche fonctionnelle 3b à une distance inférieure à 2E/3 et généralement inférieure à E/3. L'invention permet de réduire d'au moins 30% la quantité de molécules qui migrent depuis la paroi de l'emballage dans le produit emballé, ou les molécules qui migrent depuis le produit emballé dans la paroi de l'emballage, par rapport à un objet de l'art antérieur obtenu selon le brevet JP 2098415.

Les objets réalisés selon l'invention ont des propriétés particulièrement intéressantes quand leur hauteur H est supérieure ou égale à D. En effet pour des objets ayant une hauteur H supérieure à D, la couche fonctionnelle forme une barrière répartie dans au moins 80% de l'objet, ce qui permet une amélioration sensible de l'imperméabilité dudit objet.

La position radiale de la couche fonctionnelle dans la dose a une grande influence sur la répartition de ladite couche fonctionnelle dans l'objet. Aussi, il est observé que si la couche fonctionnelle est positionnée dans la dose à un rayon R inférieur à $\dfrac{D-2E}{6}$, la couche fonctionnelle ne se propage que partiellement dans la paroi latérale de l'objet. Plus précisément, la couche fonctionnelle se trouve absente de l'extrémité de la paroi latérale de l'objet. Dans la majorité des cas, il est souhaitable que la couche fonctionnelle se propage jusqu'à l'extrémité de l'objet, mais il existe quelques objets où les propriétés barrières ne sont nécessaires que sur une partie seulement de la paroi latérale de l'objet et pour lesquels la couche barrière peut être positionnée a une distance inférieure à $\dfrac{D-2E}{6}$. Il est observé également que la position radiale de la couche fonctionnelle dans la dose ne doit pas être supérieure à $\dfrac{D-2E}{2}$ pour que la couche fonctionnelle reste emprisonnée dans la paroi l'objet. Lorsque la position radiale de la couche fonctionnelle est supérieure à $\dfrac{D-2E}{2}$, on retrouve la couche fonctionnelle localement en surface de la paroi latérale de l'objet. Dans la plupart des cas, il est souhaité de maintenir la couche fonctionnelle emprisonnée surtout quand la couche fonctionnelle est sensible à l'humidité.

Le procédé est d'un grand avantage pour réaliser des préformes multicouches destinées à former des corps creux par soufflage bi-orientation. La figure 7 illustre une préforme multicouche obtenue selon le procédé inventif. Cette préforme présente une fine couche fonctionnelle 3 formant une double protection 3a et 3b au niveau des parois latérales. La couche fonctionnelle 3 est emprisonnée dans la résine principale 2 formant la paroi de la préforme, et ladite couche fonctionnelle 3 présente deux extrémités libres au niveau du fond ainsi qu'un pli sous le goulot. La couche fonctionnelle 3 forme deux couches 3a et 3b au niveau des parois latérales ; lesdites couches 3a et 3b étant situées proches de la paroi interne de la préforme. Les couches 3a et 3b sont situées respectivement à des distances inférieures à E/6 et E/3 de la paroi interne de la préforme, E étant l'épaisseur de la paroi de la préforme à l'endroit considéré. La couche fonctionnelle 3 est répartie dans toute la préforme sauf au niveau du fond et du goulot. Le pourcentage de couche fonctionnelle dans cet objet est inférieur à 2%. A titre d'exemple, l'invention permet de réaliser des préformes en PET ou en PP avec des couches fonctionnelles en PAMXD6 ou EVOH. Des couches de résine adhésive peuvent être ajoutées de part et d'autre de la couche fonctionnelle.

Le corps creux formant un emballage est obtenu par soufflage dans un moule de la préforme représentée figure 7. Ce corps creux comprenant un fond, un goulot, et une paroi latérale reliant le fond au goulot est particulièrement avantageux car il présente des propriétés barrières améliorées. Plus de 90% de la paroi dudit corps creux présente une imperméabilité améliorée par la couche fonctionnelle. La couche fonctionnelle formant une double protection se trouve à proximité de la paroi interne dudit corps creux, ce qui limite considérablement les migrations de molécules depuis la paroi du corps creux dans le contenu ; ou depuis le contenu dans la paroi du corps creux. La couche fonctionnelle est emprisonnée dans la résine principale formant la paroi dudit corps creux, et ladite couche fonctionnelle présente deux extrémités libres au niveau du fond ainsi qu'un pli sous le goulot. La couche fonctionnelle forme deux couches au niveau des parois latérales ; lesdites couches étant situées proches de la paroi interne du corps creux. Les couches fonctionnelles sont situées respectivement à des distances inférieures à F/6 et F/3 de la paroi interne du corps creux, F étant l'épaisseur de la paroi du corps creux à l'endroit considéré. La couche fonctionnelle est répartie dans tout le corps creux sauf au niveau du fond et du goulot. Le pourcentage de couche fonctionnelle dans ce corps creux est inférieur à 2%. La migration de molécules depuis la paroi du corps creux dans le produit emballé, ou la migration de molécules depuis le produit emballé dans la paroi du corps creux est réduite d'au moins 50% par rapport à l'art antérieur.

L'invention permet de réaliser des corps creux multicouches ayant des propriétés améliorées. L'invention permet de réaliser des objets multicouches ayant des couches très fines et avec un grand nombre de couches. Ce résultat peut être obtenu grâce à un procédé de co-extrusion continu pour former la dose. Ce procédé d'extrusion continu permet d'obtenir des couches très fines et en grand nombre contrairement aux procédés discontinus comme le procédé d'injection multicouche actuellement utilisé.

La figure 8 illustre la possibilité de propager la couche fonctionnelle 3 dans le goulot de la préforme sans affaiblir les propriétés mécaniques dudit goulot. En effet, l'invention permet d'ajouter des couches adhésives de chaque coté de la couche barrière et d'extruder ces couches en épaisseur suffisamment fine pour que l'ensemble des trois couches formant la couche fonctionnelle représente moins de 2% du volume de l'objet. L'amélioration de l'adhésion entre les couches, conjugué à la faible épaisseur des couches permet de propager ces couches dans le goulot de la préforme sans affaiblir les propriétés mécaniques dudit goulot.

Le corps creux obtenu par soufflage dans un moule de la préforme représentée figure 8 comprend un fond, un goulot, et une paroi latérale reliant le fond au goulot. Ce corps creux est particulièrement avantageux car il présente des propriétés barrières améliorées. Plus de 90% de la paroi dudit corps creux présente une imperméabilité améliorée par la couche fonctionnelle. La couche fonctionnelle formant une double protection se trouve à proximité de la paroi interne dudit corps creux, ce qui limite considérablement les migrations de molécules depuis la paroi du corps creux dans le contenu ; ou depuis le contenu dans la paroi du corps creux. La couche fonctionnelle forme deux couches au niveau des parois latérales et du goulot; lesdites couches étant situées proches de la paroi interne du corps creux. Les couches sont situées respectivement à des distances inférieures à F/6 et F/3 de la paroi interne du corps creux, F étant l'épaisseur de la paroi du corps creux à l'endroit considéré. La couche fonctionnelle est répartie dans tout le corps creux sauf au niveau du fond. La couche fonctionnelle représente moins de 2 % de la résine nécessaire pour réaliser le corps creux. La migration de molécules est depuis la paroi de l'emballage dans le produit emballé ou la migration de molécules depuis le produit emballé dans la paroi de l'emballage est diminuée d'au moins 50%.

Les molécules qui migrent depuis la paroi de l'emballage dans le produit emballé sont des molécules de faible masse résultant du procédé de fabrication des résines ou résultant de la décomposition de la résine pendant le procédé de mise en oeuvre. A titre d'exemple ces molécules peuvent être des monomères, des plastifiants des adjuvants, ou des molécules d'acétaldéhyde pour le PET. Egalement à titre d'exemple, les molécules migrant depuis le produit emballé dans la paroi de l'emballage peuvent être des arômes, des colorants, des adjuvants, des stabilisants, des agents conservateurs, des exhausteurs de goût.

Les résines utilisées dans le cadre de l'invention correspondent aux résines thermoplastiques couramment utilisés, et plus particulièrement celles utilisées dans le secteur de l'emballage. Parmi les résines barrières qui peuvent être utilisées pour former la couches fonctionnelle 3, on peut citer les copolymères d'éthylène vinyle alcool (EVOH), les polyamides tels que le Nylon-MXD6, les copolymères acrylonitrile méthyle acrylate (BAREX), les polymères fluorés tels que le PVDF. Citons également quelques résines pouvant être utilisées pour former la structure 2 de l'objet : polyéthylène (PE), polypropylène (PP), polystyrène (PS), polyamide (PA), polyester (PET). Cette liste n'est pas exhaustive. Lors du choix des résines, il est important de sélectionner des produits ayant des viscosités voisines. En général, il est préférable d'utiliser des résines qui à la température de travail présentent un rapport de viscosité inférieur à 10, et de préférence on choisira un rapport de viscosité inférieur à 3.

La méthode de moulage par compression consiste à alimenter une dose multicouche de résines synthétiques à l'état fondu dans la cavité d'un moule ; à former l'objet par moulage par compression de ladite dose dans la cavité dudit moule ; à refroidir l'objet puis à le démouler.

Dans les exemples présentés ici, les doses et les objets sont de géométrie simple, mais il va de soi que l'invention concerne des géométries de dose et d'objet variées. A titre d'exemple, une dose présentant un orifice peut être utilisée pour former un objet présentant une ouverture au niveau du fond.

Les objets obtenus selon l'invention comportent une couche fonctionnelle 3 formant au moins un pli au niveau de la périphérie de l'objet. Des objets comportant également un second pli proche de l'axe de symétrie de l'objet peuvent être obtenus. Une disposition de la couche fonctionnelle en forme de zigzag peut être obtenue dans l'objet.

Des doses comprenant plusieurs couches fonctionnelles 3 peuvent également être utilisées ; lesdites couches fonctionnelles étant toutes centrées sur l'axe de symétrie de ladite dose. Les objets multicouches obtenus sont caractérisés par le fait que les couches fonctionnelles se superposent au moins partiellement, et forment chacune au moins un pli.

**Revendications**

1. Procédé de réalisation d'un objet multicouche formant un corps de révolution, ledit objet comprenant au moins un fond de diamètre D relié à une paroi latérale d'épaisseur moyenne E et de hauteur H ; procédé consistant à alimenter une dose multicouche co-extrudée dans la cavité d'un moule puis à comprimer ladite dose afin de former l'objet ; la dose formant un corps de révolution autour d'un axe de symétrie ; la dose consistant en un empilement radial de plusieurs couches dont au moins une fine couche fonctionnelle, le diamètre extérieur de ladite dose étant sensiblement égal à D ; la direction de compression étant parallèle à l'axe de symétrie de ladite dose ; la compression étant réalisée sur une face de la dose, procédé **caractérisé par le fait que** la dose est comprimée seulement sur une partie de ladite face.

2. Procédé selon la revendication précédente **carac-**

**térisé par le fait que** la partie de face soumise à la compression est centrée autour de l'axe de symétrie de la dose.

3. Procédé selon la revendication précédente **caractérisée par le fait que** le diamètre de ladite partie centrale de la dose est sensiblement égal à *D-2E.*

4. Procédé selon l'une des revendications précédentes **caractérisé par le fait que** ladite couche fonctionnelle est positionnée radialement à une distance de l'axe de symétrie qui est inférieure à $\dfrac{D-2E}{2}$.

5. Procédé selon la revendication précédente **caractérisée par le fait que** ladite couche fonctionnelle est positionnée radialement à une distance de l'axe de symétrie qui est supérieure à $\dfrac{D-2E}{6}$ .

6. Objet multicouche obtenu selon le procédé de l'une quelconque des revendications précédentes **caractérisé par le fait que** la couche fonctionnelle se situe à une distance plus proche de la paroi interne que de la paroi externe de l'objet.

7. Objet multicouche selon la revendication précédente **caractérisé par le fait que**

a. la fine couche fonctionnelle forme un pli
b. la fine couche fonctionnelle possède deux extrémités libres situées au niveau du fond
c. la fine couche fonctionnelle forme une double couche dans l'épaisseur de la paroi latérale ;

8. Objet multicouche selon la revendication précédente consistant en un corps creux multicouche réalisé par soufflage bi-étirage, comprenant un goulot, un fond et une paroi latérale d'épaisseur E pouvant être variable ; ladite paroi latérale étant située entre le fond et le goulot.

9. Objet multicouche selon la revendication précédente **caractérisé par le fait que** la hauteur H dudit objet est supérieure ou égale à D.

10. Objet multicouche selon la revendication précédente **caractérisé par le fait qu'**il est une préforme pour la réalisation de corps creux multicouches par soufflage bi-étirage, comprenant un goulot, un fond et une paroi latérale reliant le fond et le goulot.

11. Préforme selon la revendication précédente ayant une couche fonctionnelle dont la proportion volumique est inférieure à 2%.

Figure 1 (art antérieur)

Figure 2 (art antérieur)

Figure 3 (art antérieur)

3

2

4

Grossissement

3a

4

3b

2

Figure 4

Figure 5

Figure 6

Grossissement

Figure 7

Grossissement

Figure 8

**Office européen**

**des brevets**

**RAPPORT DE RECHERCHE EUROPEENNE**

Numéro de la demande

EP 05 10 7677

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PATENT ABSTRACTS OF JAPAN vol. 2003, no. 06, 3 juin 2003 (2003-06-03) & JP 2003 039531 A (TOYO SEIKAN KAISHA LTD), 13 février 2003 (2003-02-13) * abrégé; figures * | 1-6 | B29B11/12 B29C31/04 B29C47/06 B29C43/20 B29C49/04 |
| | ----- | | |
| X | PATENT ABSTRACTS OF JAPAN vol. 016, no. 016 (M-1200), 16 janvier 1992 (1992-01-16) & JP 03 234604 A (YASUNAGA KUWABARA), 18 octobre 1991 (1991-10-18) * abrégé; figures * | 1-6 | |
| | ----- | | |
| A | DATABASE WPI Section Ch, Week 200538 Derwent Publications Ltd., London, GB; Class A32, AN 2005-355785 XP002366018 & JP 2005 125532 A (TOYO SEIKAN KAISHA LTD) 19 mai 2005 (2005-05-19) * abrégé * -& WO 2005/039855 A (TOYO SEIKAN KAISHA, LTD; WATANABE, KAZUNOBU; ETOH, MAKOTO; FUKABORI, H) 6 mai 2005 (2005-05-06) * figures * | 1-11 | **DOMAINES TECHNIQUES RECHERCHES (IPC)** B29C B29B |
| | ----- | | |

Le présent rapport a été établi pour toutes les revendications

| Lieu de la recherche | Date d'achèvement de la recherche | Examinateur |
|---|---|---|
| Munich | 6 février 2006 | Lorente Munoz, N |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**EP 1 757 421 A1**

**ANNEXE AU RAPPORT DE RECHERCHE EUROPEENNE
RELATIF A LA DEMANDE DE BREVET EUROPEEN NO.**

EP 05 10 7677

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2006

| Document brevet cité au rapport de recherche | | Date de publication | Membre(s) de la famille de brevet(s) | | Date de publication |
|---|---|---|---|---|---|
| JP 2003039531 | A | 13-02-2003 | AUCUN | | |
| JP 03234604 | A | 18-10-1991 | JP | 1893023 C | 26-12-1994 |
| | | | JP | 6020776 B | 23-03-1994 |
| JP 2005125532 | A | 19-05-2005 | WO | 2005039855 A1 | 06-05-2005 |
| WO 2005039855 | A | 06-05-2005 | JP | 2005125532 A | 19-05-2005 |

EPO FORM P0460

Pour tout renseignement concernant cette annexe : voir Journal Officiel de l'Office européen des brevets, No.12/82

15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2098415 A